# EUROPEAN PATENT APPLICATION

(11) **EP 4 113 864 A1**
(43) Date of publication of application: **04.01.2023**
(21) Application number: 21206833.2
(22) Date of filing: 08.11.2021
(51) Int. Cl.: H04B 10/2575, H04B 10/69

(54) **REMOTE UNIT, MULTI-BAND DISTRIBUTED SYSTEM AND SIGNAL PROCESSING METHOD**

(30) Priority: 30.06.2021 CN 202110734993
(71) Applicant: ROSENBERGER TECHNOLOGIES CO., LTD., Dianshanhu Village, Kunshan Sunzhou, Jiangsu 215345 (CN)
(72) Inventor: HE, Yaoguang, Sunzhou, 215345 (CN); ZHU, Bin, Sunzhou, 215345 (CN); MIN, Haijun, Sunzhou, 215345 (CN)
(74) Representative: Isarpatent

(57) **Abstract**

The present disclosure relates to a remote unit comprising: an optical module configured to receive a signal from an access unit communicatively connected with the remote unit; a power distribution module connected with the optical module and configured to divide the signal received via the optical module into a first component and a second component having a working band different from that of the first component; a first power amplifying low-noise amplifying module connected with the power distribution module and configured to process the first component; and a second power amplifying low-noise amplifying module connected with the power distribution module and configured to process the second component. In addition, the present disclosure also relates to a multi-band distributed system and a signal processing method used in the multi-band distributed system.

## Description

### FIELD OF THE DISCLOSURE

The present disclosure relates to the communications field, and more specifically to a remote unit, a multi-band distributed system including the remote unit, and a signal processing method used in the multi-band distributed system.

### BACKGROUND

With the development of 5G and subsequent communication systems, the increase in signal processing bandwidth and the application of MIMO (multiple input multiple output) have brought great pressure and challenges to system transmission and processing, conventional solutions are difficult to achieve; and on the other hand, the original 2G, 3G, and 4G systems cannot be eliminated in a short time, so the coexistence of multiple systems becomes inevitable.

CN109495902A discloses a remote apparatus for a multi-band distributed system, a multi-band distributed system and a method for processing uplink/downlink signals. The above-mentioned document introduces a multi-band distributed system, wherein the near-end receives a multi-band base station signal and transmits it to the remote apparatus through an optical fiber. The remote apparatus includes a master remote unit and at least one slave remote unit. The master remote unit and the slave remote unit respectively correspond to and process signals of one frequency band. The main remote unit is used to process the received signal and generate the signal adapting to different band channels and output it. The master remote unit and the slave remote unit are connected by a radio frequency line to transmit signals.

The above system has the following shortcomings:
The remote power amplifier of the traditional analog 2G/3G/4G systems uses the APD (Analog Pre-distortion) technology to ensure the system linearity index and avoid the channel interference. APD (Analog Pre-distortion) can achieve the power amplifier linear compensation of signal bandwidth of tens of megabytes, and can meet the linear requirement of 2G/3G/4G power amplification. For 5G applications, due to the working bandwidth reaches more than 100M, the existing APD technology cannot achieve the power amplifier linear compensation of the hundreds of megabytes signal, and the interference between channels is serious.

The traditional digital 2G/3G/4G systems use digital serial optical signals to achieve the relay transmission between the access unit and the remote unit. For 5G applications, due to the radio frequency bandwidth reaching more than 100M and the application of 5G MIMO, the speed of the optical fiber link will reach tens to hundreds of Gigabytes, which makes great requirements on optical modules and fiber resources, which is difficult for operators to accept.

The implementation of the above-mentioned remote system is complicated, especially obvious when there are many supported bands. There are connections of power, data, and radio frequency cables between each slave remote unit and the master remote unit, which causes the messy engineering connection, the large footprint, and high cost, which is not suitable for the large-scale promotion. Therefore, single analog or digital 2G/3G/4G distributed system cannot meet the requirements for 5G signal processing.

### SUMMARY

In view of the in-depth understanding of the problems in the background art, the inventor of the present disclosure proposes a remote unit, and the remote unit includes:
an optical module configured to receive a signal from an access unit communicatively connected with the remote unit;
a power distribution module connected with the optical module and configured to divide the signal received via the optical module into a first component and a second component having a working band different from a working band of the first component;
a first power amplifying low-noise amplifying module connected with the power distribution module and configured to process the first component; and
a second power amplifying low-noise amplifying module connected with the power distribution module and configured to process the second component.

The remote unit disclosed according to the present disclosure uses two independent power amplifying low-noise amplifying modules to process the input signal, and the input signal itself includes a multi-band signal, that is, the input signal includes both a first component working in the first band and a second component working in the second band different from the first band of the first component, two independent power amplifying low-noise amplifying modules are used to separately process the first component and the second component, to enable process the first band of the first component and the second band of the second component based on corresponding band widths differently, so that the remote unit according to the present disclosure can process simultaneously the signal including a first component and a second component having different band-widths to improve the application scenario of the remote unit according to the present disclosure.

In an embodiment according to the present disclosure, the second power amplifying low-noise amplifying module is configured to use a digital pre-distortion technology to process the second component. In this way, by introducing the digital pre-distortion (DPD) technology to process the second component, so that the second component whose working band is much larger than that of the first component can be processed efficiently, thereby improving the working band range of the processable signal of the remote unit according to the present disclosure.

In an embodiment according to the present disclosure, the optical module receives an analog signal output from the access unit. Compared with the traditional digital 2G/3G/4G system that employs a digital serial optical signal to achieve the relay transmission between the access unit and the remote unit, in this way the remote unit according to the present disclosure can be free from the expensive and possibly unrealizable requirement of the high speed digital optical module, thereby making the remote unit according to the present disclosure suitable for the requirements of the next-generation mobile communication technology.

In an embodiment according to the present disclosure, the first component includes at least one of a 2G signal, a 3G signal, and/or a 4G signal. Preferably, in an embodiment according to the present disclosure, the second component includes a 5G signal and/or a 6G signal.

In an embodiment according to the present disclosure, the second power amplifying low-noise amplifying module comprises:
a driving amplifier configured to amplify the second component;
a digital processing module configured to perform noise reduction, filtering and pre-distortion processing on the amplified second component;
a power amplifier configured to perform power amplification on the second component processed by the digital processing module;
a circulator configured to isolate the second component amplified by the power amplifier; and
a filter configured to filter the second component isolated by the circulator.

Preferably, in an embodiment according to the present disclosure, the digital processing module is further configured to obtain the second component amplified by the power amplifier and the second component amplified by the driving amplifier, and a digital pre-distortion technology is performed on the second component amplified by the power amplifier and the second component amplified by the driving amplifier to implement pre-distortion compensation of a signal input to the power amplifier.

More preferably, in an embodiment according to the present disclosure, the second power amplifying low-noise amplifying module further comprises a low-noise amplifier module, a second driving amplifier, and a radio frequency switch, wherein the filter is further configured to filter a received uplink signal, the filtered uplink signal is amplified by the low-noise amplifier module after passing through the circulator and the radio frequency switch, and fed into the digital processing module for noise reduction and filtering, and then amplified by the second driving amplifier to output.

More preferably, in an embodiment according to the present disclosure, the power amplifier is made of gallium nitride material.

The second aspect of the present disclosure relates to a multi-band distributed system, wherein the multi-band distributed system comprises:
an access unit; and
the remote unit according to the first aspect of the present disclosure.

In an embodiment according to the present disclosure, the access unit comprises a radio frequency card module for receiving and/or transmitting the second component, and the radio frequency card module is configured to receive a radio frequency signal of a band associated with the second component from a base station.

In an embodiment according to the present disclosure, the multi-band distributed system further comprises:
at least a base station;
at least an optical fiber connected with the access unit and the remote unit;
a combiner; and
an antenna,
wherein the combiner is configured to combine a plurality of signals received from the remote unit and output them to the antenna, or divide a signal received from the antenna into a plurality of signals and output them to the remote unit, and the antenna is configured to radiate signals processed via the combiner or receive signals and output them to the combiner.

Furthermore, the third aspect of the present disclosure relates to a signal processing method, and the signal processing method comprises:
S1: receiving a downlink signal from an access unit communicatively connected with the remote unit via an optical module;
S2: dividing the downlink signal received via the optical module into a first component and a second component having a working band different from a working band of the first component via a power distribution module;
S3, processing the first component via a first power amplifying low-noise amplifying module; and
S4, processing the second component via a second power amplifying low-noise amplifying module.

Preferably, in an embodiment according to the present disclosure, step S4 further comprises:
using digital pre-distortion technology to process the second component via the second power amplifying low-noise amplifying module.

Preferably, in an embodiment according to the present disclosure, step S 1 further comprises:
receiving an analog signal output from the access unit via the optical module.

Optionally, in an embodiment according to the present disclosure, the first component includes at least one of a 2G signal, a 3G signal, and/or a 4G signal, and/or the second component includes a 5G signal and/or a 6G signal.

Preferably, in an embodiment according to the present disclosure, step S4 further comprises:
amplifying the second component via a driving amplifier;
performing noise reduction, filtering, and pre-distortion processing on the amplified second component via a digital processing module;
performing power amplification on the second component processed by the digital processing module via a power amplifier;
isolating the second component amplified by the power amplifier via a circulator; and
filtering the second component isolated by the circulator via a filter.

Preferably, in an embodiment according to the present disclosure, step S4 further comprises:
obtaining the second component amplified by the power amplifier and the second component amplified by the driving amplifier via a digital processing module; and
performing digital pre-distortion technology on the second component amplified by the power amplifier and the second component amplified by the driving amplifier to implement pre-distortion compensation of a signal input to the power amplifier.

In summary, the remote unit disclosed according to the present disclosure uses two independent power amplifying low-noise amplifying modules to process the input signal, and the input signal itself includes a multi-band signal, that is, the input signal includes both a first component working in the first band and a second component working in the second band different from the first band of the first component, two independent power amplifying low-noise amplifying modules are used to separately process the first component and the second component, that is, to enable process the first band of the first component and the second band of the second component based on corresponding bandwidths differently, so that the remote unit according to the present disclosure can process simultaneously the signal including a first component and a second component having different band-widths to improve the application scenario of the remote unit according to the present disclosure.

### BRIEF DESCRIPTION OF THE DRAWINGS

The embodiments are shown and clarified with reference to the drawings. These drawings are used to clarify the basic principle, so that the aspects necessary for understanding the basic principle are shown. The drawings are not to scale. In the drawings, the same reference numerals indicate similar features.
FIG.1 shows a view of a communication relay system according to the prior art;
FIG. 2 shows a view of a first power amplifying low-noise amplifying module 150 of a remote unit used in the communication relay system according to the prior art;
FIG. 3 shows a view of a remote unit according to an embodiment of the present disclosure;
FIG. 4 shows a view of a second power amplifying low-noise amplifying module 250 used in the remote unit shown in FIG. 3 according to the present disclosure;
FIG. 5 shows a view of a multi-band distributed system 200 according to an embodiment of the present disclosure;
FIG. 6 shows a view of a multi-band distributed system 300 according to another embodiment of the present disclosure; and
FIG. 7 shows a flowchart of a signal processing method 400 according to an embodiment of the present disclosure.

Other features, characteristics, advantages and benefits of the present disclosure will become more apparent by referring to the following detailed description in conjunction with the accompanying drawings.

### DETAILED DESCRIPTION

In the following detailed description of the preferred embodiments, reference will be made to the attached drawings constituting a part of the present disclosure. The accompanying drawings illustrate specific embodiments capable of implementing the present disclosure by way of example. The exemplary embodiments are not intended to be exhaustive of all embodiments according to the present disclosure. It can be understood that without departing from the scope of the present disclosure, other embodiments may be utilized, and structural or logical modifications may also be made. Therefore, the following detailed description is not restrictive, and the scope of the present disclosure is defined by the appended claims.

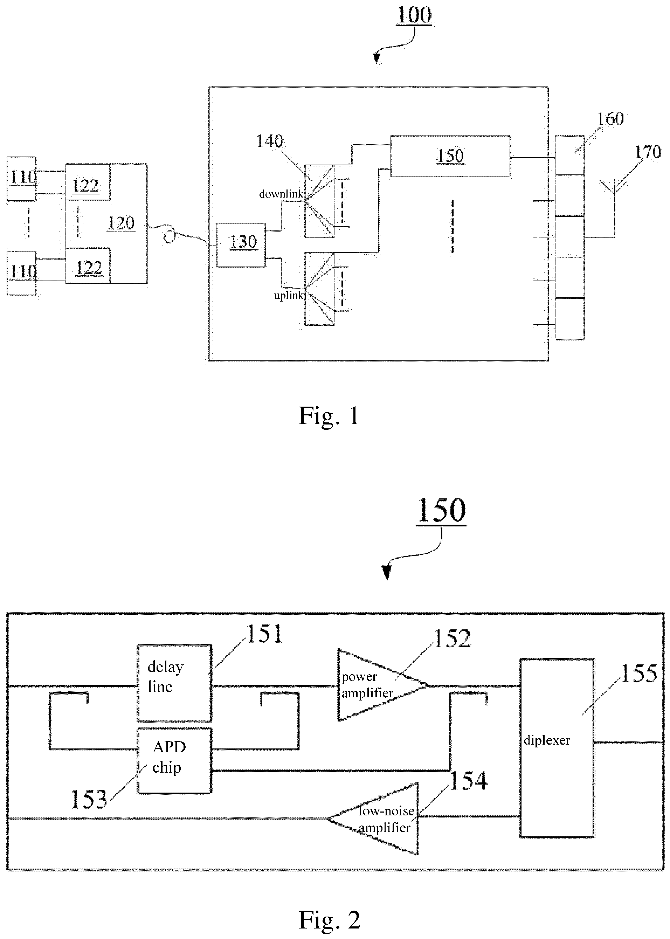

FIG. 1 shows a view of a communication relay system according to the prior art, and FIG. 2 shows a view of a first power amplifying low-noise amplifying module 150 of a remote unit used in the communication relay system according to the prior art. It can be seen from FIGS. 1 and 2 that in the traditional communication relay system 100, that is, the access unit 120 of the traditional analog 2G/3G/4G system 100 receives downlink signals from the base stations 110 separately by means of two receiving modules 122, and then the downlink signals are transmitted to the optical module 130 through optical fiber transmission, and then distributed to the corresponding remote power amplifier 150 via the power distribution module 140, at this time, the power distribution module 140 only plays the role of power distribution, and the subsequent remote power amplifiers 150 having the same structure which all use the APD (Analog Pre-distortion) technology to ensure system linearity index, and to avoid channel interference, the signals amplified by a plurality of remote power amplifiers 150 are radiated by means of the antenna 170 after being processed via the combiner 160. It can be further seen from FIG. 2 that in the remote power amplifier 150 herein, the signal is firstly processed by the delay line 151 and then output to the power amplifier 152. Here, the APD chip 153 will collect the signal input to the remote power amplifier 150 and the signal amplified by the power amplifier 152, and then the signal input to the power amplifier 152 is adjusted using the APD analog pre-distortion technology based on these signals, so that the power amplifier 152 achieves linear amplification, and then output to the next stage via the diplexer 155. For the uplink signal, it will be output through the diplexer 155 and the low-noise amplifier 154.

For 5G applications, because the working bandwidth reaches more than 100M, the existing APD technology cannot achieve the power amplifier linear compensation of the hundreds of megabytes signal, and the interference between channels is serious. And if the traditional digital 2G/3G/4G system is used, as such a digital 2G/3G/4G system uses a digital serial optical signal to realize the relay transmission between the access unit and the remote unit. For 5G applications, the rate of the optical fiber link will reach tens to hundreds of Gigabytes, which makes great requirements on optical modules and fiber resources, which is difficult for operators to accept.

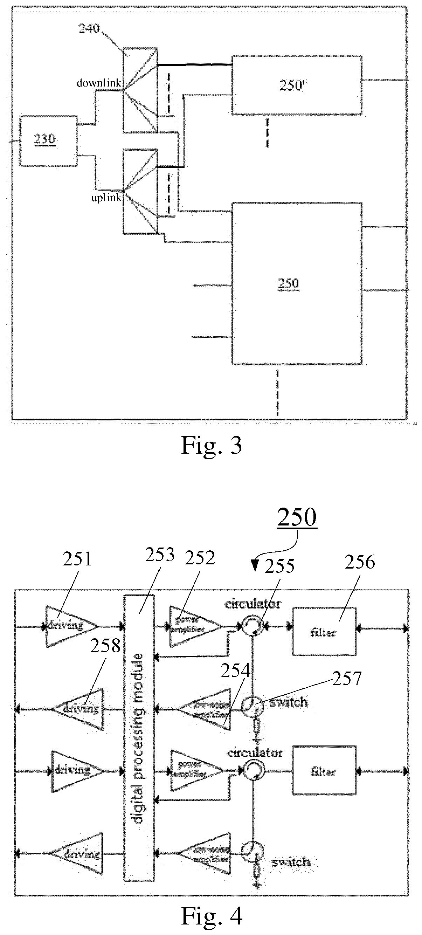

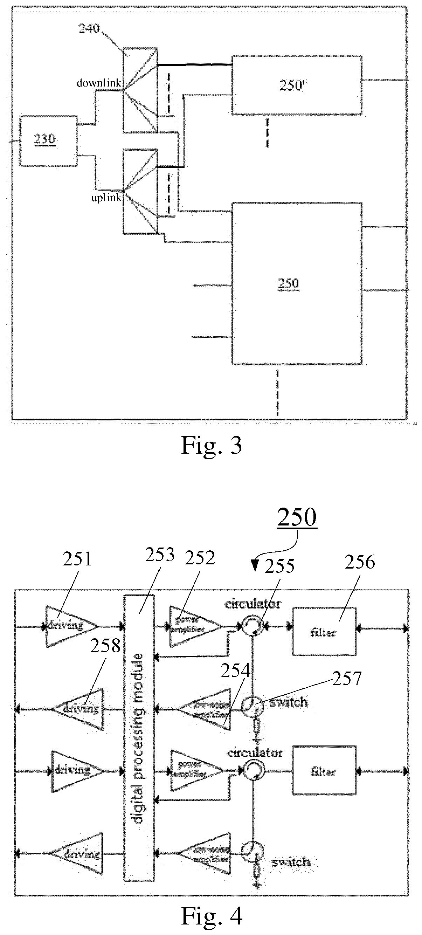

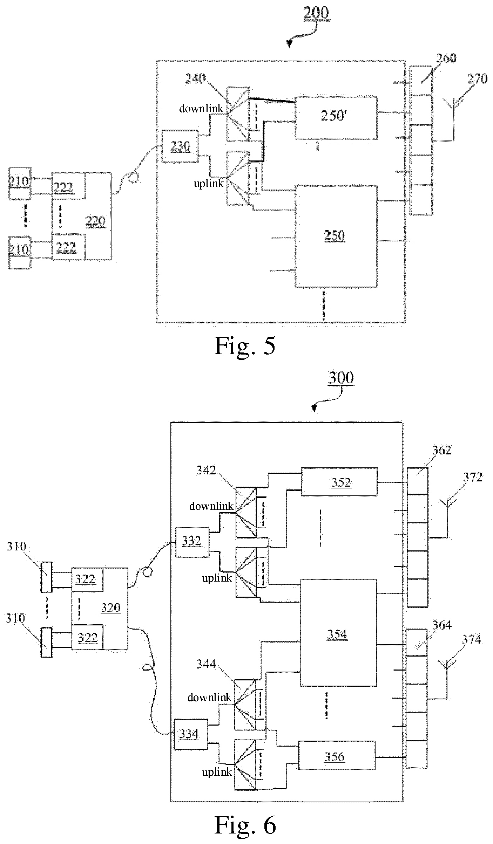

In view of the above technical problems, the inventor of the present disclosure creatively thought of modifying the structure of the remote unit to realize the application for 5G. By the way of the introduction of digital processing technology and algorithms, and the technology like noise reduction for analog optical modules, the strict requirements of indexes like ACLR (Adjacent Channel Leakage Power Ratio) and EVM (Error Vector Magnitude) under the conditions of multi-remote applications in the satellite network of the system are satisfied, the problem of a sharp decline of system performance of a single analog system under one-to-multiple condition is solved, and simultaneous coverage of 2G/3G/4G/5G multi-operator base station signals is achieved. Specifically, FIG. 3 shows a view of a remote unit according to an embodiment of the present disclosure. It can be seen from FIG. 3 that the inventor of the present disclosure proposes a remote unit in this application, the remote unit includes an optical module 230 configured to receive a signal from an access unit (e.g., the access unit 220 in FIG.5) communicatively connected with the remote unit; herein preferably, the optical module 230 receives an analog signal output from the access unit 220. Additionally or alternatively, the optical module 230 also converts the received optical signal in the form of analog signal into an electrical signal. Compared with the traditional digital 2G/3G/4G system that uses digital serial optical signals to implement the relay transmission between the access unit 110 and the remote unit, in this way the remote unit according to the present disclosure can be free from the expensive and possibly unrealizable requirement of the high speed digital optical module, thereby making the remote unit according to the present disclosure suitable for the requirements of the next-generation mobile communication technology.

In addition, the remote unit according to the present disclosure further comprises a power distribution module 240 connected with the optical module 230 and configured to divide the signal received via the optical module 230 into a first component and a second component having a working band different from that of the first component. Furthermore, the remote unit according to the present disclosure further comprises a first power amplifying low-noise amplifying module 250' and a second power amplifying low-noise amplifying module 250. The first power amplifying low-noise amplifying module 250' is connected with the power distribution module 240 and is configured to process the first component, and the second power amplifying low-noise amplifying module 250 is connected with the power distribution module 240 and is configured to process the second component. The remote unit disclosed according to the present disclosure uses two independent power amplifying low-noise amplifying modules 250' and 250 to process the input signal, and the input signal itself includes a multi-band signal, that is, the input signal includes both the first component working in the first band, and the second component working in the second band different from the first band of the first component, two independent power amplifying low-noise amplifying modules are used to separately process the first component and the second component, to enable process the first band of the first component and the second band of the second component based on corresponding band widths differently, so that the remote unit according to the present disclosure can process simultaneously the signal including a first component and a second component having different band-widths to improve the application scenario of the remote unit according to the present disclosure. Here, preferably, the second power amplifying low-noise amplifying module 250 is configured to use a digital pre-distortion technology to process the second component. In this way, by introducing the digital pre-distortion (DPD) technology to process the second component, the second component whose working band is much larger than that of the first component can be processed efficiently, thereby improving the working band range of the processable signal of the remote unit.

Herein in order to adapt to the development of new mobile communication technologies, the first component can be, for example, a 4G and pre-4G communication signal component, and the second component can be, for example, a 5G and post-5G communication signal component. Preferably, in an embodiment according to the present disclosure, the first component further includes at least one of a 2G signal, a 3G signal, and/or a 4G signal. Preferably, in an embodiment according to the present disclosure, the second component includes 5G signals and/or 6G signals and possibly signals with higher bandwidth.

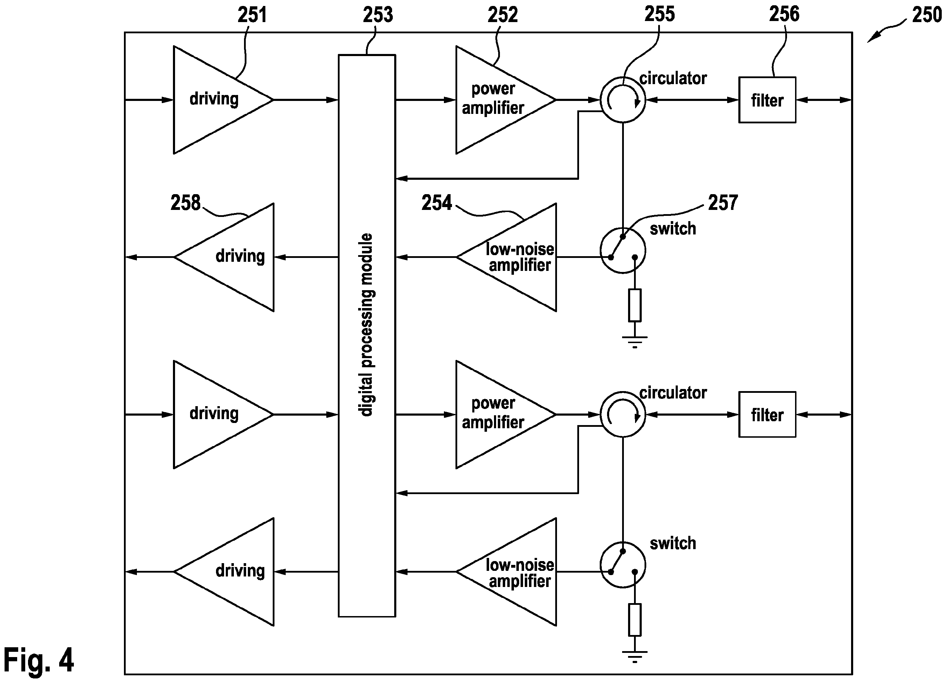

The components of the second power amplifying low-noise amplifying module 250 according to the present disclosure will be described in detail below with reference to FIG. 4. FIG. 4 shows a view of the second power amplifying low-noise amplifying module 250 used in the remote unit shown in FIG. 3 according to the present disclosure. It can be seen from FIG. 4 that the second power amplifying low-noise amplifying module 250 comprises:
a driving amplifier 251 configured to amplify the second component;
a digital processing module 253 configured to perform noise reduction, filtering and pre-distortion processing on the amplified second component;
a power amplifier 252configured to perform power amplification on the second component processed by the digital processing module 253;
a circulator 255 configured to isolate the second component amplified by the power amplifier 252; and
a filter 256 configured to filter the second component isolated by the circulator 255.

Herein preferably, in the embodiment shown in FIG. 4, the digital processing module 253 is further configured to obtain the second component amplified by the power amplifier 252 and the second component amplified by the driving amplifier 251, and a digital pre-distortion technology is performed on the second component amplified by the power amplifier and the second component amplified by the driving amplifier to implement pre-distortion compensation for the signal input to the power amplifier 252.

More preferably, in the embodiment shown in FIG. 4, the second power amplifying low-noise amplifying module 250 further comprises a low-noise amplifier module 254, a second driving amplifier 258, and a radio frequency switch 257, wherein the filter 256 is further configured to filter a received uplink signal, the filtered uplink signal is amplified by the low-noise amplifier module 254 after passing through the circulator 255 and the radio frequency switch 257, and fed into the digital processing module 253 for noise reduction and filtering, and then amplified by the second driving amplifier 258 to output. Since the lower part of the embodiment shown in FIG. 4 has the same operating mechanism as that of the upper part, it will not be repeated here. However, those skilled in the art from FIG. 4 should be understood that the same modules of the upper and lower two groups share a digital processing module 253, which because the processing capability and processing efficiency of the digital processing module 253 using the DPD digital pre-distortion technology are improved highly compared with that of using the APD analog pre-distortion technology, so that the same modules of two or more groups share a digital processing module 253. This sharing will be further clarified in FIG 6 below.

More preferably, to realize the ultra-high bandwidth amplification function for mobile communication technologies such as 5G, in an embodiment according to the present disclosure, the power amplifier 252 can be made of, for example, gallium nitride material. The digital processing module 253 in this solution uses an integrated TRX chip to improve the single-board integration, uses a GaN power amplifier 252 to support ultra-wideband amplification, and uses the digital pre-distortion technology to achieve linear amplification of ultra-wideband signals under lower energy consumption conditions, and achieve the compatible design of the 5G 2T2R power amplifying low-noise amplifying module under the compatible condition with the original 4G power amplifier low-noise amplifier structure and size. The needs of operators for simultaneous coverage of 2G/3G/4G/5G are satisfied by configuring 2G/3G/4G/5G power amplifying low-noise amplifying modules in a set of high-power remote units simultaneously, for 5G, there is no need to add new fiber resources, which saves CAPEX expenses. The efficiency of the power amplifying low-noise amplifying module improves about 50% higher than that of the 2G/3G/4G module, which increases the product density, and the power amplifying low-noise amplifying module can support the application requirements of 5G 4T4R in a remote system.

The structure of the remote unit proposed according to the present disclosure has been introduced above, and the multi-band distributed system using the remote unit will be introduced below in conjunction with FIGS. 5 and 6. FIG. 5 shows a view of a multi-band distributed system 200 according to an embodiment of the present disclosure. It can be seen from FIG. 5 that the multi-band distributed system 200 comprises:
an access unit 220; and
the remote unit according to the first aspect of the present disclosure.

In an embodiment according to the present disclosure, the access unit comprises a radio frequency card module 222 for receiving and/or transmitting the second component (for example, the radio frequency card module 222 in the lower left corner of the access unit 220 in FIG. 5), and the radio frequency card module 222 is configured to receive a radio frequency signal of the band associated with the second component from the base station 210. In the remote unit proposed according to the present disclosure, two independent power amplifying low-noise amplifying modules 250' and 250 are used to process the input signal, and the input signal itself includes a multi-band signal, that is, the input signal includes both the first component working in the first band and the second component working in the second band different from the first band of the first component, by using two independent power amplifying low-noise amplifying modules 250' and 250 respectively to process the first component and the second component, the first band of the first component and the second band of the second component can be processed differently, for example, based on the band widths thereof, so that the remote unit according to the present disclosure can process the signal including the first component and the second component with different band widths simultaneously to improve the application scenario of the remote unit according to the present disclosure.

In an embodiment according to the present disclosure, the multi-band distributed system further comprises:

At least one base station, for example, two base stations in FIG. 5, that is, the two base stations 210 shown, additionally or alternatively, the two base stations 210 include a base station corresponding to multiple standards of one or more operators; here, those skilled in the art should understand that the two base stations here are only exemplary and not restrictive, the multi-band distributed system according to the present disclosure can include only one base station or more than two base stations. If only one base station is included, then the base station will support multiple communication modes with different standards, for example, the one base station supports 2G, 3G, 4G, and 5G wireless communications at the same time.

In addition, the multi-band distributed system according to the present disclosure can also comprise:
at least one optical fiber shown as a connection between the access unit 220 and the optical module 230, and the at least one optical fiber connects to the access unit and the remote unit;
a combiner 260; and
an antenna 270,
wherein, the combiner 260 is configured to combine multiple signals received from the remote unit and output them to the antenna 270, or divide the signal received from the antenna 270 into multiple signals and output them to the remote unit, and the antenna 270 is configured to radiate the signals processed via the combiner 260 or receive the signals and output them to the combiner 260.

FIG. 6 shows a view of a multi-band distributed system 300 according to another embodiment of the present disclosure. It can be seen from FIG. 6 that the multi-band distributed system 300 comprises:
an access unit 320; and

The remote unit according to the first aspect of the present disclosure.

In an embodiment according to the present disclosure, the access unit comprises a radio frequency card module 322 for receiving and/or transmitting the second component (for example, the radio frequency card module 322 in the lower left corner of the access unit 320 in FIG. 6), the radio frequency card module 322 is configured to receive/transmit a radio frequency signal of the band associated with the second component from/to the base station 310. In the remote unit proposed according to the present disclosure, two independent power amplifying low-noise amplifying modules 352 and 354 are used to process the input signal, The example shown in FIG. 6 also comprises another additional power amplifying low-noise amplifying module 356 whose structure is similar to that of the power amplifying low-noise amplifying module 352, the reason why two power amplifying low-noise amplifying modules 352 and 356 and only another power amplifying low-noise amplifying module 354 are shown is the power amplifying low-noise amplifying module 354 can realize multiplexing of multiple signals, as previously clarified with reference to FIG. 4, the power amplifying low-noise amplifying module 354 can include, for example, two sets of power amplifier low-noise amplifier sub-modules which can share the same digital processing module. The analog signal input to the optical module 332 or the optical module 334 itself includes a multi-band signal, that is, the input signal includes both the first component working in the first band and the second component working in the second band different from the first band of the first component, two independent power amplifying low-noise amplifying modules are used to separately process the first component and the second component, to process the first band of the first component and the second band of the second component based on differences between the first and the second band widths, so that the remote unit according to the present disclosure can process simultaneously the signal including a first component and a second component having different band-widths to improve the application scenario of the remote unit according to the present disclosure.

In an embodiment according to the present disclosure, the multi-band distributed system 300 further includes:
a plurality of base stations, such as a plurality of base stations 310 shown in FIG. 6, additionally or alternatively, the plurality of base stations 310 include base stations with multiple standards corresponding to one or more operators;
at least one optical fiber, including two optical fibers in the example shown in FIG. 6, the two optical fibers are shown as connections between the access unit 320 and the optical module 332 and between the access unit 320 and the optical module 334, and the two optical fibers are connected with the access unit 320 and the optical modules 332 and 334 of the remote unit;
combiners 362 and 364; and
antennas 372 and 374,
wherein the combiners 362 and 364 are configured to combine a plurality of signals received from the remote unit and output them to the antennas 372 and 374, or divide signals received from the antennas 372 and 374 into a plurality of signals and output them to the remote unit, and the antennas 372 and 374 are configured to radiate the signals processed by the combiners 362 and 364 or receive the signals and output them to the combiners 362 and 364.

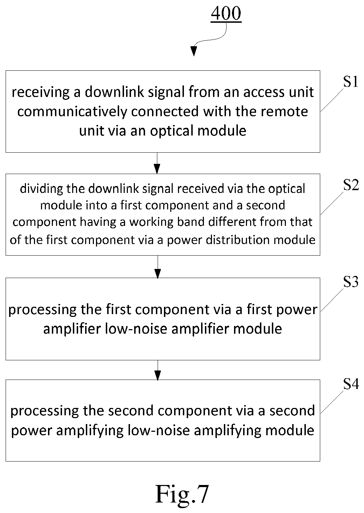

FIG. 7 shows a flowchart of a signal processing method 400 according to an embodiment of the present disclosure. It can be seen from FIG. 7 that the signal processing method 400 involved in the third aspect of the present disclosure comprises at least the following four steps, namely:
Step S1, receiving a downlink signal from an access unit communicatively connected with the remote unit via an optical module;
Step S2, dividing the downlink signal received via the optical module into a first component and a second component having a working band different from that of the first component via a power distribution module;
Step S3, processing the first component via a first power amplifying low-noise amplifying module; and
Step S4, processing the second component via a second power amplifying low-noise amplifying module.

Preferably, in an embodiment according to the present disclosure, step S4 further comprises:
using digital pre-distortion technology to process the second component via the second power amplifying low-noise amplifying module.

Preferably, in an embodiment according to the present disclosure, step S 1 further comprises:
the optical module receives an analog signal output from the access unit.

Optionally, in an embodiment according to the present disclosure, the first component further includes at least one of a 2G signal, a 3G signal, and/or a 4G signal, and/or the second component includes a 5G signal and/or 6G signal.

Preferably, in an embodiment according to the present disclosure, step S4 further includes:
amplifying the second component via a driving amplifier;
performing noise reduction, filtering, and pre-distortion processing on the amplified second component via a digital processing module;
performing power amplification on the second component processed by the digital processing module via a power amplifier;
isolating the second component amplified by the power amplifier via a circulator; and
filtering the second component isolated by the circulator via a filter.

Preferably, in an embodiment according to the present disclosure, step S4 further comprises:
obtaining the second component amplified by the power amplifier and the second component amplified by the driving amplifier via a digital processing module; and
employing a digital pre-distortion technology on the second component amplified by the power amplifier and the second component amplified by the driving amplifier to implement pre-distortion compensation of a signal input to the power amplifier.

In summary, the inventive idea of the inventor of the present disclosure is to propose an innovative analog remote plus digital distribution system, the high-power remote unit uses the DPD (digital pre-distortion) technology and the analog optical fiber remote technology to overcome the impact that the analog pre-distortion technology of the high-power remote power amplifier of the analog distributed system cannot achieve the pre-distortion correction of 5G ultra-wideband signals, to solve the problem of linearization of ultra-wideband power amplifiers and limited system transmission bandwidth, and meanwhile to overcome the bottleneck and the limitation of the relay transmission bandwidth of a single digital system, to satisfy the requirement of 5G MIMO applications, and to realize the coverage requirements for 2G/3G/4G/5G. For the new 5G coverage of 2G/3G/4G, there is no need to add new fiber resources and site resources, the network cost is low, the engineering connection is simple, and the system is smoothly upgraded.

Although different exemplary embodiments of the present disclosure have been described, it is obvious to those skilled in the art that various changes and modifications can be made and realize one or some of the advantages of the present disclosure without departing from the spirit and scope of the present disclosure. For those skilled in the art, other components performing the same function can be replaced as appropriate. It should be understood that the features explained herein with reference to a particular figure can be combined with features of other figures, even in those cases where this is not explicitly mentioned. In addition, the method of the present disclosure can be implemented either in all software implementations using appropriate processor instructions or in a hybrid implementation using a combination of hardware logic and software logic to achieve the same result. Such modifications to the solution according to the present disclosure are intended to be covered by the appended claims.

## Claims

1. A remote unit, **characterized in that** the remote unit comprises:
an optical module configured to receive a signal from an access unit communicatively connected with the remote unit;
a power distribution module connected with the optical module and configured to divide the signal received via the optical module into a first component and a second component having a working band different from that of the first component;
a first power amplifying low-noise amplifying module connected with the power distribution module and configured to process the first component; and
a second power amplifying low-noise amplifying module connected with the power distribution module and configured to process the second component.

2. The remote unit according to claim 1, wherein the second power amplifying low-noise amplifying module is configured to use a digital pre-distortion technology to process the second component.

3. The remote unit according to claim 1 or 2, wherein the optical module receives an analog signal output from the access unit.

4. The remote unit according to claim 1, wherein the second power amplifying low-noise amplifying module comprises:
a driving amplifier configured to amplify the second component;
a digital processing module configured to perform noise reduction, filtering and pre-distortion processing on the amplified second component;
a power amplifier configured to perform power amplification on the second component processed by the digital processing module;
a circulator configured to isolate the second component amplified by the power amplifier; and
a filter configured to filter the second component isolated by the circulator.

5. The remote unit according to claim 4, wherein the digital processing module is further configured to obtain the second component amplified by the power amplifier and the second component amplified by the driving amplifier, and a digital pre-distortion technology is performed on the second component amplified by the power amplifier and the second component amplified by the driving amplifier to implement pre-distortion compensation of a signal input to the power amplifier.

6. The remote unit according to claim 4, wherein the second power amplifying low-noise amplifying module further comprises a low-noise amplifier module, a second driving amplifier, and a radio frequency switch, wherein the filter is further configured to filter a received uplink signal, the filtered uplink signal is amplified by the low-noise amplifier module after passing through the circulator and the radio frequency switch, and fed into the digital processing module for noise reduction and filtering, and then amplified by the second driving amplifier to output.

7. The remote unit according to claim 4, wherein the power amplifier is made of gallium nitride material.

8. A multi-band distributed system, wherein the multi-band distributed system comprises:
an access unit; and
the remote unit according to any of claims 1-7.

9. The multi-band distributed system according to claim 8, wherein the access unit comprises a radio frequency card module for receiving and/or transmitting the second component, and the radio frequency card module is configured to receive a radio frequency signal of a band associated with the second component from a base station.

10. The multi-band distributed system according to claim 8, wherein the multi-band distributed system further comprises:
at least a base station;
at least an optical fiber connected with the access unit and the remote unit;
a combiner; and
an antenna,
wherein the combiner is configured to combine a plurality of signals received from the remote unit and output them to the antenna, or divide a signal received from the antenna into a plurality of signals and output them to the remote unit, and the antenna is configured to radiate the signals processed via the combiner or receive the signals and output them to the combiner.

11. A signal processing method, **characterized in that** the signal processing method comprises:
S1: receiving a downlink signal from an access unit communicatively connected with the remote unit via an optical module;
S2: dividing the downlink signal received via the optical module into a first component and a second component having a working band different from that of the first component via a power distribution module;
S3, processing the first component via a first power amplifying low-noise amplifying module; and
S4, processing the second component via a second power amplifying low-noise amplifying module.

12. The signal processing method according to claim 11, wherein step S4 further comprises:
using digital pre-distortion technology to process the second component via the second power amplifying low-noise amplifying module.

13. The signal processing method according to claim 11 or claim 12, wherein step S1 further comprises:
receiving an analog signal output from the access unit via the optical module.

14. The signal processing method according to claim 11, wherein step S4 further comprises:
amplifying the second component via a driving amplifier;
performing noise reduction, filtering, and pre-distortion processing on the amplified second component via a digital processing module;
performing power amplification on the second component processed by the digital processing module via a power amplifier;
isolating the second component amplified by the power amplifier via a circulator; and
filtering the second component isolated by the circulator via a filter.

15. The signal processing method according to claim 14, wherein step S4 further comprises:
obtaining the second component amplified by the power amplifier and the second component amplified by the driving amplifier via a digital processing module; and
performing digital pre-distortion technology on the second component amplified by the power amplifier and the second component amplified by the driving amplifier to implement pre-distortion compensation of a signal input to the power amplifier.
